# EUROPEAN PATENT APPLICATION

(11) **EP 4 769 717 A1**
(43) Date of publication of application: **01.07.2026**
(21) Application number: 25196144.7
(22) Date of filing: 15.08.2025
(51) Int. Cl.: H01M 50/242, H01M 50/249, H01M 50/291, B60K 1/04, B60L 50/64, H01M 50/289

(54) **BATTERY PACK AND VEHICLE**

(30) Priority: 26.12.2024 CN 202423247364 U; 21.02.2025 WO PCT/CN2025/078391
(71) Applicant: Eve Energy Co., Ltd., Huizhou, Guangdong 516006 (CN)
(72) Inventor: YANG, Songlin, Huizhou, Guangdong, 516006 (CN); LI, Fan, Huizhou, Guangdong, 5160006 (CN); CHEN, Zhiwei, Huizhou, Guangdong, 516006 (CN); CHEN, Chaohai, Huizhou, Guangdong, 516006 (CN); LIU, Huajun, Huizhou, Guangdong, 516006 (CN); LI, Zuoying, Huizhou, Guangdong, 516006 (CN); LIANG, Huimin, Huizhou, Guangdong, 516006 (CN); YANG, Xingrui, Huizhou, Guangdong, 516006 (CN)
(74) Representative: Berggren Oy

(57) **Abstract**

A battery pack (10) and a vehicle (50) are provided. The battery pack (10) includes a box (100) and a crossbeam (200). The box (100) is provided with a receiving space and mounting holes connected to the receiving space. The crossbeam is fixedly connected to the box (100) and mounted in the receiving space, and a portion of the crossbeam is positioned in the mounting holes and configured to connect with a vehicle frame (30) to mount the battery pack (10) on the vehicle frame (30).

## Description

### Technical Field

The present application relates to the technical field of vehicles, and specifically relates to a battery pack and a vehicle.

### Related Art

The battery pack of a new energy vehicle is one of the core components of the vehicle. When the battery pack is mounted on the vehicle, energy may be transmitted to the battery pack due to uneven road surfaces or sudden changes in vehicle speed, which may easily affect the installation stability and safety of the battery pack.

In related technologies, conventional box designs separate the crossbeam and the mounting point. The force transmission path is usually: vehicle frame, mounting point, battery pack box frame, module crossbeam, and battery cell module.

### SUMMARY

The force transmission path in this design is excessively long, which can lead to structural failures and reduced rigidity in the battery pack under vibration-related conditions, such as cracks in the box welds or the box body itself, and a lower overall modal response that may resonate with the vehicle. Moreover, the conventional design positions mounting points around the perimeter of the box, typically requiring extensions in the form of ears or brackets outside the box for vehicle attachment. This not only unnecessarily consumes battery installation space but also diminishes space utilization efficiency.

The present application provides a battery pack, including a box and a crossbeam; the box is provided with a connected receiving space and mounting holes; the crossbeam is fixedly connected to the box and installed in the receiving space, and a portion of the crossbeam is disposed in the mounting holes and configured to connect with the vehicle frame to mount the battery pack on the vehicle frame.

The present application also provides a vehicle, including a vehicle frame and the battery pack described above, where the crossbeam is connected to the vehicle frame to mount the battery pack on the vehicle frame.

### Advantageous Effects

The battery pack provided by the present application includes a box and a crossbeam. The box is provided with a receiving space and mounting holes connected to the receiving space. The crossbeam is fixedly connected to the box and mounted in the receiving space, and a portion of the crossbeam is disposed in the mounting holes and configured to connect with the vehicle frame to mount the battery pack onto the vehicle frame. By connecting the crossbeam with the vehicle frame, the battery pack is mounted on the vehicle frame, that is, the mounting points are integrated into the crossbeam. This shortens the force transmission path and enhances the strength of the box, which improves the fatigue resistance of the battery pack.

The vehicle provided by this application mounts the battery pack onto the vehicle frame through the crossbeam. That is to say, this configuration integrates the mounting points into the crossbeam, reducing the force transmission path and enhancing the strength of the box, thereby enhancing the fatigue resistance of the battery pack.

### BRIEF DESCRIPTION OF THE DRAWINGS

FIG. 1 is a view of a battery pack provided by a viable implementation of the present application from multiple perspectives.
FIG. 2 is an exploded view of a portion of a structure of the battery pack provided by a viable implementation of the present application.
FIG. 3 is a schematic structural view from a first perspective of FIG. 2.
FIG. 4 is a bottom view of the battery pack from a viable implementation of the present application.
FIG. 5 is a cross-sectional view of FIG. 4 along an A-A direction.
FIG. 6 is a partially enlarged view of area B in FIG. 5.
FIG. 7 is a partially enlarged view of area C in FIG. 5.
FIG. 8 is a schematic structural view from a second perspective of FIG. 2.
FIG. 9 is a frame diagram of a vehicle from a viable implementation of the present application.

### Explanation of Reference Symbols in the Drawings

10: battery pack; 30: vehicle frame; 31: through hole; 50: vehicle; 51: fastener;
100: box; 110: bottom wall; 120: receiving space; 130: side wall; 131: first sub-wall; 133: second sub-wall; 111: mounting hole; 112: hole wall;
200: crossbeam; 201: threaded hole; 210: protrusion; 230: main body; 240: solid portion; 250: cavity portion; 251: cavity.

### DETAILED DESCRIPTION

The battery pack in new energy vehicles is one of core components of the vehicle. Mounted onto the vehicle, the battery pack may receive energy due to uneven road surfaces or sudden changes in vehicle speed, which may easily impact the installation stability and safety of the battery pack. The primary function of the mounting points is to secure the battery pack firmly to the vehicle body, ensuring the stability of the battery pack under various driving conditions.

A crossbeam is a structural component connecting the battery pack and the vehicle body. The crossbeam can significantly improve the overall rigidity of the battery pack and the vehicle body, and reduce vibration and deformation during driving. When a vehicle collision occurs, the crossbeam can effectively disperse the impact forces and protect the battery pack from damage. The crossbeam serves as a support for installing electrical connectors and thermal management systems, thereby ensuring the stability and reliability of these systems.

In related art, conventional box designs separate the crossbeam and the mounting point. The force transmission path is usually: the vehicle frame, mounting point, frame of the battery pack box, module crossbeam, and battery cell module. Such a force transmission path is too long. When the battery pack is under vibration-related conditions, structural failure and reduced rigidity easily occur, such as cracking of the box welds or the box body, and a low overall modal response is prone to resonate with the vehicle. In addition, since the mounting points of the conventional box design are located on the sides or around the battery pack box, the box usually extends outward in the form of mounting ears or brackets for connection with the vehicle, which greatly wastes the installation space of the battery and results in low space utilization.

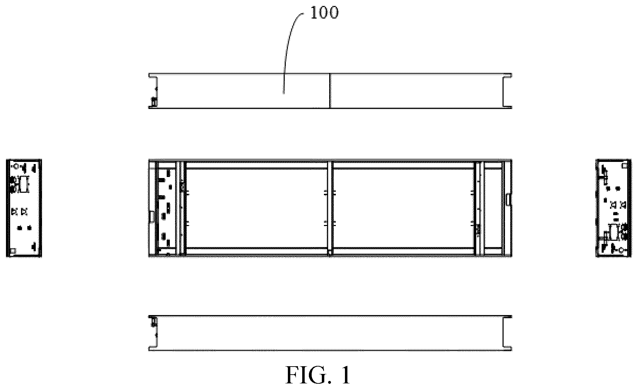

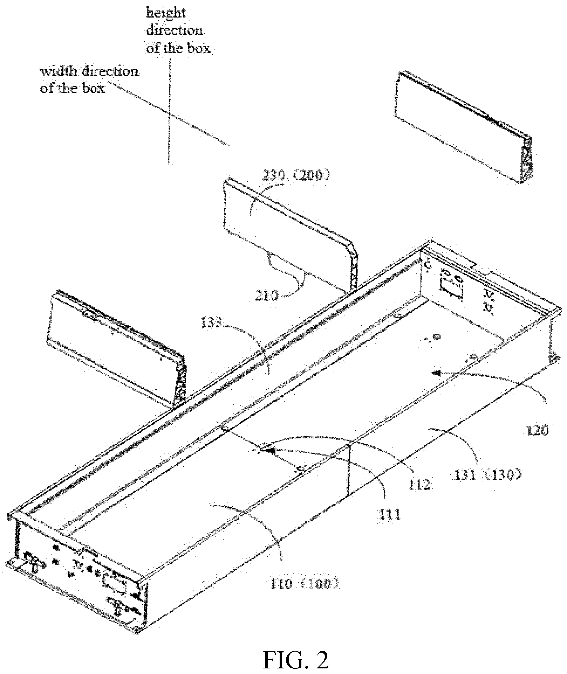

In a first aspect, embodiments of the present application provide a battery pack. Referring to FIG. 1 and FIG. 2, the battery pack includes: a box 100 and a crossbeam 200, with the crossbeam 200 mounted in the box 100. The crossbeam 200 and the box 100 may be fixedly connected, for example, by welding, screwing, or the like.

The box 100 is provided with a receiving space 120 and mounting holes 111 connected to the receiving space 120. In some examples, the box 100 includes a bottom wall 110 and side walls 130. The bottom wall 110 and the side walls 130 form the receiving space 120, and the bottom wall 110 is equipped with the mounting holes 111. In other examples, the mounting holes may also be provided in the side walls.

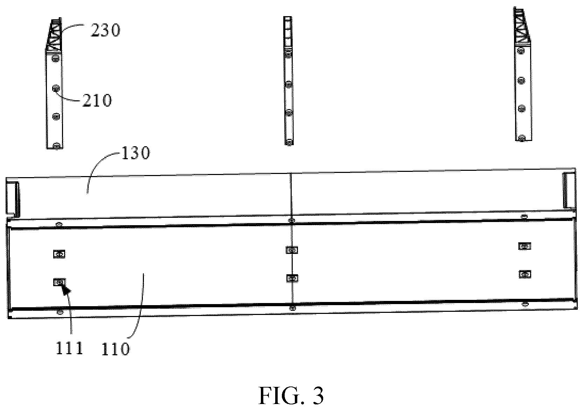

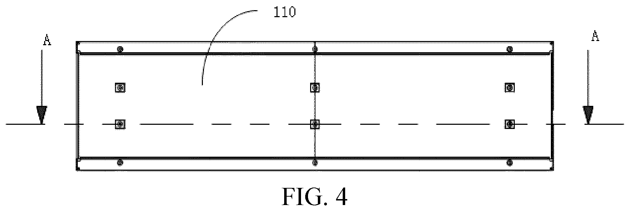

Referring to FIG. 3 and FIG. 4, the crossbeam 200 is fixedly connected to the box 100 and mounted in the receiving space 120. The crossbeam 200 and the box 100 may be connected by screwing, welding, or the like.

A portion of the crossbeam 200 is positioned within the mounting holes 111 and configured to connect to the vehicle frame, thereby mounting the battery pack on the vehicle frame. For example, the mounting holes 111 position a portion of the crossbeam 200 to face the vehicle frame, so that this portion of the crossbeam 200 may be connected to the vehicle frame through the mounting holes 111. The crossbeam 200 passes through the mounting holes 111. By providing the mounting holes 111, the crossbeam 200 can be connected to the vehicle frame. The crossbeam 200 can be connected to the vehicle frame by methods such as screwing, riveting, or welding. In some examples, the crossbeam 200 and the vehicle frame are joined by screws.

In this way, the battery pack is mounted to the vehicle frame via the connection of the crossbeam 200 to the vehicle frame. In other words, the battery pack is connected to the vehicle frame at least through the crossbeam 200.

In the embodiments of the present application, the battery pack is mounted on the vehicle frame by connecting the crossbeam 200 to the vehicle frame, that is, mounting points are integrated into the crossbeam. This shortens the force transmission path and increases the strength of the box, improving the fatigue resistance of the battery pack.

The installation position of the battery pack on the vehicle is usually located below a chassis. The reason is that this location minimizes the impact on passenger space within the vehicle and helps to maintain a low center of gravity of the vehicle, thereby improving driving stability. This not only allows the battery pack to occupy almost the entire chassis space, but also effectively reduces the risk of short-circuit spontaneous combustion during a collision through the protection of reinforcing ribs and force-bearing frames.

In some embodiments, the battery pack is located below the chassis, and the crossbeam 200 can be connected to the chassis of the vehicle frame.

In some embodiments, the battery pack may further include battery cells, and the battery cells may be installed in the receiving space 120 between the crossbeam 200 and the box.

As a frame structure of the battery pack, one of the main functions of the crossbeam is to provide physical support to ensure that the entire battery pack can withstand forces from different directions, such as vibration and impact, during vehicle driving. Especially in the event of a collision, the crossbeam can effectively absorb and disperse energy, protecting the internal battery cells from direct damage.

In some embodiments, the box 100 includes a bottom wall 110 and side walls 130. The bottom wall 110 and the side walls 130 form the receiving space 120, and the bottom wall 110 is provided with the mounting holes 111.

In these embodiments, the mounting holes 111 are in the bottom wall 110, and the crossbeam 200 connects to the vehicle frame through the mounting holes 111 at the bottom. Compared with the related art that uses mounting ears or brackets on the sides of a battery pack box to secure the battery pack to the vehicle frame, the embodiments of the present application connect the battery pack to the vehicle frame through the mounting holes 111 at the bottom. That is to say, the battery pack is in a bottom-locked state, which can save the width dimension of the battery. Within the same size range, this solution can accommodate more battery cells to obtain more power and extend the driving range of the vehicle.

The side of the crossbeam 200 may be welded to the side wall 130, thereby strengthening the connection between the crossbeam 200 and the box 100 of the battery pack.

In some embodiments, the crossbeam 200 includes a protrusion 210 and a main body 230. One end of the protrusion 210 is fixedly connected to the main body 230, and the opposite end of the protrusion 210 extends away from the main body and is inserted into the mounting hole 111. The protrusion 210 is configured to connect with the vehicle frame. The mounting hole 111 includes a hole wall surrounding the protrusion 210, and the hole wall is fixedly connected to the protrusion 210 on all four sides. The protrusion 210 and the main body 230 may be fixedly connected by methods such as screwing, welding, or integrally forming.

In these embodiments, the crossbeam 200 is connected to the vehicle frame through the protrusion 210. During processing, the protrusion 210 can be inserted into the mounting hole 111 first, and then the perimeter of the protrusion 210 is fixedly connected to the hole wall of the mounting hole 111. Since the hole wall 111 of the mounting hole surrounds the protrusion 210, the perimeter of the protrusion 210 can be connected to the hole wall of the mounting hole 111, so that the protrusion 210 and the bottom wall 110 can be tightly connected, thereby improving force transmission.

In some embodiments, the hole wall and the protrusion 210 are connected by friction stir welding. In these embodiments, friction stir welding is used to create a uniform and tight weld between the hole wall and the protrusion 210. Friction stir welding provides good weld quality, ensuring the airtightness and strength of the box.

Friction stir welding (FSW) is a solid-state joining process that achieves a strong bond between two or more materials by means of mechanical force and frictional heat without melting the materials of the workpieces. Because of the lower temperature during the friction stir welding process, the pores and cracks that may occur in traditional fusion welding are avoided, resulting in higher weld quality. Compared to other welding methods, friction stir welding reduces material waste and energy consumption, and simplifies the equipment structure to reduce costs.

During friction stir welding, a rotating stirring head is inserted into the joint of the workpieces that are to be welded. The stirring head is constituted by two main parts: a shoulder at the top and a stirring pin that extends into the joint. As the stirring head moves along a predetermined path, its rotational motion causes strong friction with the surface and internal materials of the workpiece, generating enough heat to bring these materials to a plastic state but not completely melt them. At this time, the plasticized material flows from the front to the rear under the pressure of the stirring head, and is forced to re-solidify due to the pressure applied by the shoulder, forming a dense and defect-free weld.

Unlike traditional fusion welding, friction stir welding does not require welding wire or shielding gas and produces less pollution, smoke, and radiation, making it more environmentally friendly.

In some embodiments, the mounting hole 111 is a round hole, and a cross-section of the protrusion 210 is round. For example, a cylinder or a cone. In some examples, the protrusion 210 may be cylindrical. In these embodiments, the mounting hole 111 is a round hole, and the cross-section of the protrusion 210 is round. The protrusion 210 and the mounting hole 111 are shaped to correspond to each other, and the welding can be more uniform during friction stir welding. In some examples, the protrusion 210 and the mounting hole 111 may be coaxially arranged.

During processing, the mounting holes 111 can be pre-formed in the bottom wall 110 of the box 100. A machine is used to process the main body 230 and the protrusion 210. Then, the protrusion 210 is inserted into the mounting hole 111. The protrusion 210 and the mounting hole 111 can be fitted with hole-shaft clearance fit. When there are multiple protrusions 210 on one crossbeam, each protrusion 210 is assembled with one corresponding mounting hole 111, so that the box 100 and a single crossbeam are assembled using several hole-shaft fits. Subsequently, circular friction stir welding is performed from the bottom of the box 100 along a circular gap created by the hole-shaft fit to rigidly connect the crossbeam and the box 100. Because the friction stir welding has good welding quality, the airtightness and strength of the box are ensured.

In some embodiments, the side walls 130 include a first sub-wall 131 and a second sub-wall 133 arranged along a width direction of the box, and opposite ends of the main body 230 are respectively connected to the first sub-wall 131 and the second sub-wall 133.

In some examples, the mounting holes 111 may be formed in the bottom wall 110, and the protrusion 210 of the crossbeam 200 is fixedly connected to the bottom wall 110. The crossbeam 200 is connected to the vehicle frame through the mounting holes 111 of the bottom wall 110. At the same time, opposite ends of the main body 230 are respectively connected to the first sub-wall 131 and the second sub-wall 133. That is, the bottom of the crossbeam 200 is fixedly connected to the bottom wall 110, and the bottom of the crossbeam 200 is connected to the vehicle frame. The sides of the crossbeam 200 are connected to the first sub-wall 131 and the second sub-wall 133. In this way, the connection between the crossbeam 200 and the box 100 is more secure and reliable. The side of the crossbeam 200 and the first sub-wall 131 may be connected by welding, such as arc welding. The side of the crossbeam 200 and the second sub-wall 133 may be connected by welding, such as arc welding.

In some embodiments, there are multiple protrusions 210, and the multiple protrusions 210 are arranged at intervals along the width direction of the box 100. There are multiple mounting holes 111, and each protrusion 210 is aligned with one mounting hole 111. In this way, the battery pack is securely mounted to the vehicle frame by connecting the multiple protrusions 210 to the vehicle frame.

In some embodiments, there are multiple crossbeams 200.

In some examples, there are three crossbeams 200, and the three crossbeams 200 are arranged at intervals along a length direction of the box.

In some examples, one crossbeam 200 includes one main body 230 and four protrusions 210, and the four protrusions 210 are arranged at intervals along the width direction of the box 100. There are four mounting holes 111, and each protrusion 210 is aligned with one mounting hole 111.

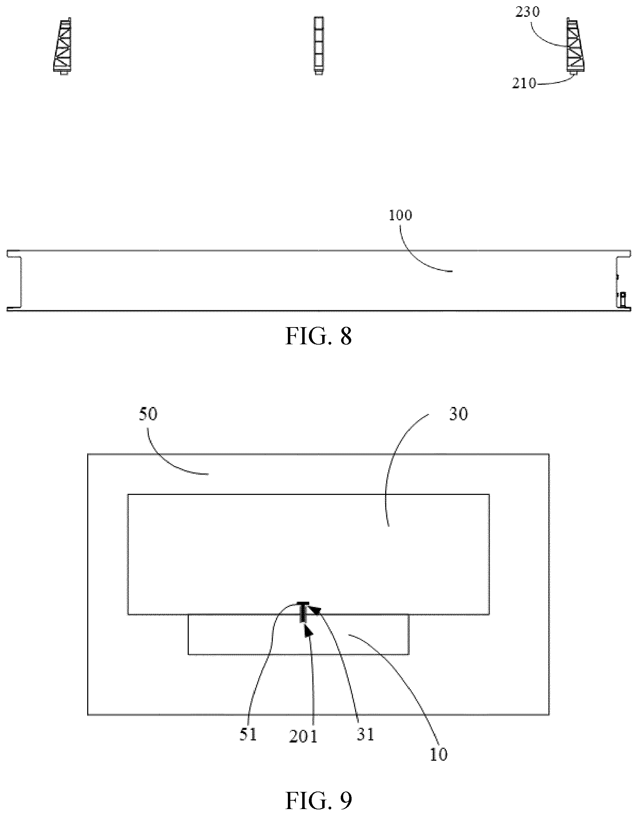

Referring to FIG. 9, in a second aspect, embodiments of the present application also provide a vehicle 50, which includes a vehicle frame 30 and the battery pack 10 described above. The crossbeam 200 is connected to the vehicle frame 30 to mount the battery pack 10 on the vehicle frame 30. The vehicle 50 has all the beneficial effects of the battery pack 10 described above, and a detailed description thereof is omitted here for brevity.

The vehicle may be a fuel vehicle, a plug-in hybrid vehicle, or a new energy vehicle, and the like. This disclosure does not limit the vehicle type.

In the vehicle of the present application, by connecting the crossbeam 200 with the vehicle frame, the battery pack is mounted on the vehicle frame, that is, the mounting point is integrated into the crossbeam. This reduces the force transmission path and enhances the strength of the box, so that the fatigue resistance of the battery pack is better.

The battery pack can be installed under the chassis. This is because the chassis position can minimize the impact on the passenger space in the vehicle and help maintain the low center of gravity of the vehicle, thereby improving driving stability. This not only allows the battery pack to occupy almost the entire chassis space, but also effectively reduces the risk of short-circuit spontaneous combustion during a collision through the protection of reinforcing ribs and force-bearing frames.

The battery cells may be installed in the receiving space 120 between the crossbeam 200 and the box.

In the vehicle of the present application, the mounting holes 111 are formed in the bottom wall 110 of the battery pack, and the crossbeam 200 is connected to the vehicle frame through the mounting holes 111 at the bottom. This contrasts with related art, which employs mounting ears or brackets on the sides of the battery pack box to secure the battery pack to the vehicle frame. In the embodiment of the present application, the battery pack is connected to the vehicle frame through the mounting holes 111 at the bottom. That is, the battery pack is in a bottom-locked state, which can save the width dimension of the battery. Within the same size range, this solution can accommodate more battery cells to obtain more power and extend the driving range of the vehicle.

In some embodiments, the crossbeam 200 includes a protrusion 210 and a main body 230. One end of the protrusion 210 is fixedly connected to the main body 230, and the opposite end of the protrusion 210 extends away from the main body and is inserted into the mounting hole 111. The protrusion 210 is configured to connect with the vehicle frame. The mounting hole 111 includes a hole wall 112 surrounding the protrusion 210, and the hole wall 112 is fixedly connected to the perimeter of the protrusion 210. The protrusion 210 and the main body 230 may be fixedly connected by methods such as screwing, welding, or integrally forming.

In these embodiments, the crossbeam 200 is connected to the vehicle frame through the protrusion 210. During processing, the protrusion 210 can be inserted into the mounting hole 111 first, and then the perimeter of the protrusion 210 is fixedly connected to the hole wall 112 of the mounting hole 111. Since the hole wall 112 of the mounting hole 111 surrounds the protrusion 210, the perimeter of the protrusion 210 can be connected to the hole wall 112 of the mounting hole 111, so that the protrusion 210 and the bottom wall 110 can be tightly connected, thereby improving the force transmission.

In some embodiments, the hole wall and the protrusion 210 are connected by friction stir welding. In these embodiments, the hole wall and the protrusion 210 are uniformly and tightly welded by friction stir welding. Friction stir welding provides good welding quality, and the airtightness and strength of the box are ensured.

In some embodiments, the portion of the crossbeam 200 disposed in the mounting hole 111 is connected to the vehicle frame, such as by welding, screwing, or the like.

In some embodiments, the portion of the crossbeam 200 positioned in the mounting hole 111 is provided with a threaded hole 201. The vehicle frame 30 is provided with a through hole 31. The vehicle further includes a fastener 51. The fastener 51 passes through the through hole 31 and the threaded hole 201 to fasten the crossbeam 200 and the vehicle frame 30. The fastener 51 can be a screw.

Referring to FIG. 8, in some examples, the crossbeam 200 includes a protrusion 210 and a main body 230. One end of the protrusion 210 is fixedly connected to the main body 230, and the opposite end of the protrusion 210 extends away from the main body and is inserted into the mounting hole 111. The protrusion 210 is configured to connect with the vehicle frame. The mounting hole 111 includes a hole wall surrounding the protrusion 210, and the hole wall is fixedly connected to the perimeter of the protrusion 210. The end of the protrusion 210 away from the main body 230 is provided with a threaded hole. The vehicle frame may be provided with an opening. In this way, the screws can be sequentially passed through the opening on the vehicle frame and the threaded hole of the protrusion 210, and the screws are fastened with the threaded hole of the protrusion 210, so that the battery pack is locked to the vehicle frame.

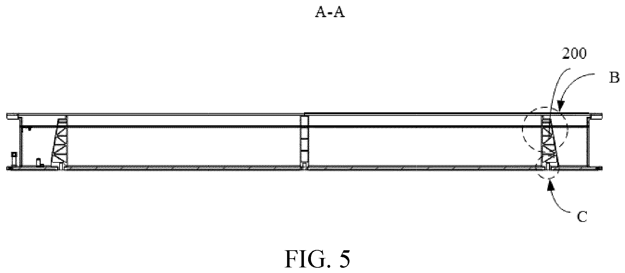

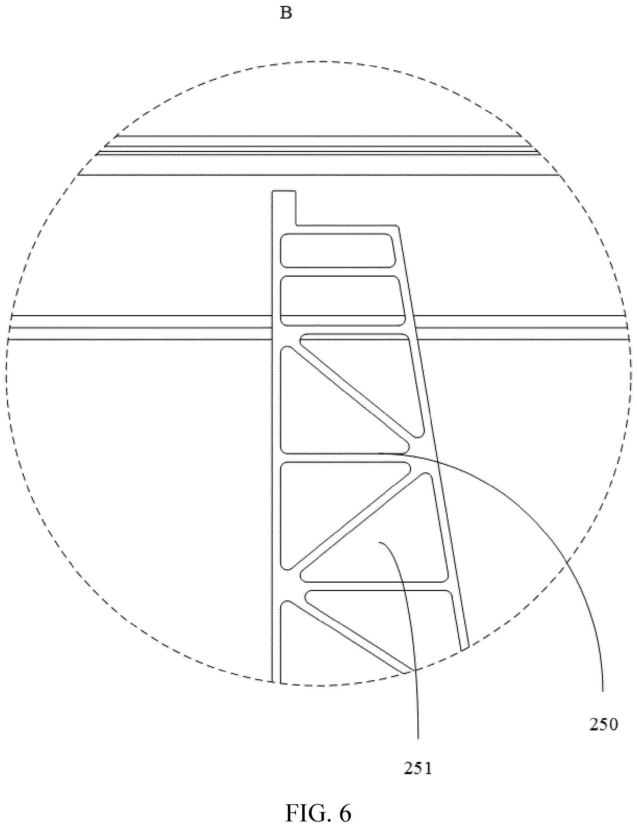

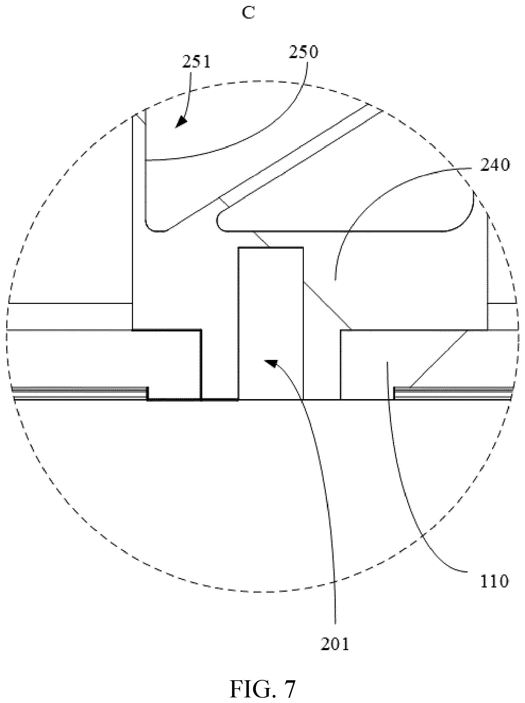

Referring to FIG. 5, FIG. 6, and FIG. 7, in some embodiments, the crossbeam 200 includes a solid portion 240 and a cavity portion 250 connected to each other. The solid portion 240 is disposed close to the mounting hole 111. The cavity portion 250 is provided with a cavity 251. The threaded hole 201 is located in the solid portion 240.

In some examples, the threaded hole extends along a height direction of the solid portion 240, and a height of the solid portion 240 needs to be greater than or equal to a depth of the threaded hole. This configuration leads to a tighter connection and improved sealing. Providing the solid portion 240 at the bottom of the crossbeam 200 can enhance the rigidity of the crossbeam.

## Claims

1. A battery pack (10), **characterized in that** comprises:
a box (100) comprising a receiving space (120) and a mounting hole (111) communicating with the receiving space; and
a crossbeam (200) fixedly connected to the box (100) and mounted in the receiving space (120), a portion of the crossbeam (200) being disposed in the mounting hole (111) and configured to connect to a vehicle frame (30) to mount the battery pack (10) on the vehicle frame (30).

2. The battery pack (10) according to claim 1, wherein the box (100) comprises a bottom wall (110) and side walls (130), the bottom wall (110) and the side walls (130) enclose the receiving space (120), and the mounting hole (111) is arranged in the bottom wall (110).

3. The battery pack (10) according to claim 1 or 2, wherein the crossbeam (200) comprises a protrusion (210) and a main body (230), one end of the protrusion (210) is fixedly connected to the main body (230), and an opposite end of the protrusion extends away from the main body (230) and is inserted into the mounting hole (111), the protrusion (210) is configured to connect to a vehicle frame (30).

4. The battery pack (10) according to claim 3, wherein, the mounting hole (111) includes a hole wall (112) surrounding the protrusion (210), and the hole wall (112) is fixedly connected to a perimeter of the protrusion (210).

5. The battery pack (10) according to claim 4, wherein the hole wall (112) and the protrusion (210) are connected through friction stir welding.

6. The battery pack (10) according to claim 5, wherein the mounting hole (111) is a round hole, and a cross-section of the protrusion (210) is round.

7. The battery pack (10) according to any one of claims 3 to 6, wherein the side walls (130) comprise a first sub-wall (131) and a second sub-wall (133) arranged along a width direction of the box (100), and opposite ends of the main body (230) are respectively connected to the first sub-wall (131) and the second sub-wall (133).

8. The battery pack (10) according to any one of claims 3 to 7, wherein the crossbeam (200) comprises multiple protrusions (210), the protrusions (210) are arranged at intervals along a width direction of the box (100), the box (100) comprises multiple mounting holes (111), and each of the protrusions (210) is arranged corresponding to one of the mounting holes (111).

9. The battery pack (10) according to any one of claims 1 to 8, wherein the battery pack (10) comprises multiple crossbeams (200), and the crossbeams (200) is arranged at intervals along the width direction of the box (100).

10. The battery pack (10) according to any one of claims 1 to 9, further comprising battery cells mounted in the receiving space (120) between the crossbeam (200) and the box (100).

11. A vehicle (50), **characterized in that** comprises a vehicle frame (30) and the battery pack (10) as claimed in any one of claims 1-10, wherein the crossbeam (200) is connected to the vehicle frame (30) to mount the battery pack (10) on the vehicle frame (30).

12. The vehicle (50) according to claim 11, wherein the portion of the crossbeam (200) disposed in the mounting hole (111) is provided with a threaded hole (201), the vehicle frame (30) is provided with a through hole (31), the vehicle (50) further comprises a fastener (51), and the fastener (51) passes through the through hole (31) and the threaded hole (201) to fasten the crossbeam (200) to the vehicle frame (30).

13. The vehicle (50) according to claim 12, wherein the crossbeam (200) comprises a solid portion (240) and a cavity portion (250) connected to each other, the solid portion (240) is disposed close to the mounting hole (111), the cavity portion (250) is provided with a cavity (251), and the threaded hole (201) is located in the solid portion (240).

14. The vehicle (50) according to any one of claims 11 to 13, wherein the battery pack (10) is mounted below a chassis of the vehicle frame (30), and the crossbeam (200) is connected to the chassis through the mounting hole (111) .

15. The vehicle (50) according to any one of claims 11 to 14, wherein the crossbeam (200) is configured to absorb and disperse impact forces during a vehicle collision to protect battery cells within the receiving space (120).
